# FASCICULE DE BREVET EUROPEEN

(11) **EP 4 527 649 B1**
(45) Date de publication et mention de la délivrance du brevet: **08.10.2025**
(21) Numéro de dépôt: 24198499.6
(22) Date de dépôt: 04.09.2024
(51) Int. Cl.: B60J 5/04, B60P 1/26, A01D 90/08, B62D 33/027

(54) **EXTENSION AUTO-PIVOTANTE POUR BARRIÈRE LATÉRALE DE PLATEAU DE TRANSPORT**
SELBSTSCHWENKENDE VERLÄNGERUNG FÜR EINE SEITENSPERRE EINER TRANSPORTPLATTE
SELF-PIVOTING EXTENSION FOR A SIDE BARRIER OF A TRANSPORT TRAY

(30) Priorité: 21.09.2023 BE 202305779
(43) Date de publication de la demande: 26.03.2025
(73) Titulaire: Ets JOSKIN S.A., 4630 Soumagne (BE)
(72) Inventeur: JOSKIN, Victor, 4633 MELEN (BE)
(74) Mandataire: AWA Benelux

(56) Documents cités:
- EP-B1- 0 004 594
- FR-A1- 2 653 715
- US-A1- 2010 178 128
- US-B1- 7 207 631

## Description

### Objet de l'invention

La présente invention se rapporte à un dispositif d'extension de barrière de maintien latérale pour plateau de transport de marchandises pour camion ou (semi-)remorque routière, agricole ou forestière, et en particulier pour remorque-plateau fourragère, destinée au transport de caisses-palettes, ballots de paille, de foin, etc.

### Etat de la technique

On connaît des barrières de maintien latérales équipant des remorques-plateau servant à transporter des marchandises diverses, par exemple le fourrage en ballots, en vue d'enserrer la cargaison pendant le transport. Pour des raisons de facilité de chargement, on souhaite que ces barrières puissent être escamotables. Ainsi, certaines de ces barrières pivotent de haut en bas et vice versa au moyen d'un dispositif à parallélogramme déformable via un vérin hydraulique, comme c'est notamment le cas dans le document WO 2008/135236 A1 (voir également US 2010/0178128 A1, de la même famille de brevets).

Ce document divulgue une remorque de transport destinée à recevoir des marchandises, notamment constituées de produits de récolte agricole, tels que des ballots pressés à partir de paille ou d'ensilage. De telles remorques comportent une plateforme de chargement, qui supporte la cargaison et est délimitée par des parties latérales longitudinales et transversales de maintien, ou garde-corps, agencées pour que l'espace de transport soit accessible, notamment lorsque les parois latérales longitudinales sont dégagées. Selon cette divulgation, au moins l'une des parois latérales longitudinales est munie d'un dispositif de support, au moyen duquel la paroi latérale longitudinale peut être déplacée d'une position ouverte proche du sol à une position fermée, dans laquelle elle retient et comprime au moins une couche supérieure de la cargaison empilée et, ce faisant, la sécurise latéralement.

Le mécanisme qui permet le passage de la position inférieure à la position supérieure de la paroi de maintien, et vice versa, sur un ou sur les deux côtés latéraux, est constitué de deux parallélogrammes articulés, se trouvant aux extrémités transversales de la remorque, et actionnés chacun par exemple par un vérin hydraulique. Ce document divulgue également la présence possible de moyens flexibles tels que des treillis, cordes, etc. qui apportent une solution à la sécurisation des rangées de ballots inférieures, qui ne sont pas comprimées par la paroi de maintien.

Un impératif dévolu aux barrières qui s'escamotent vers le bas est qu'elles ne dépassent pas en position basse la hauteur de plateau, soit généralement 80 à 120 cm, pour ne pas gêner le processus de chargement ou ne pas risquer d'être endommagées pendant celui-ci.

Un autre impératif est de pouvoir enserrer les parties inférieure et supérieure de la cargaison jusqu'à une hauteur la plus élevée possible, la charge pouvant typiquement monter jusqu'à 400cm de haut par rapport au sol.

Ceci est important en agriculture car on veut charger le plus de marchandises possible tout en respectant la réglementation en vigueur. L'évolution des machines tend ainsi vers une réduction de la hauteur de plancher des plateaux au profit de la hauteur utile de chargement. Cette réduction impacte directement la hauteur sécurisée par les barrières escamotables classiques qui voient leur efficacité réduite, le risque étant de ne pas sécuriser la cargaison, par exemple les ballots, située sur les couches inférieure et supérieure de chargement.

Dès lors, avec les barrières escamotables vers le bas selon l'état de la technique, la cargaison, dont la hauteur peut culminer, comme indiqué ci-dessus, jusqu'à 400 cm de haut, n'est enserrée que sur une section réduite de sa hauteur. De plus, en fonction des dimensions individuelles de la cargaison, la matière située sur la couche inférieure et sur la couche supérieure n'est pas enserrée. La sécurité proposée par ces barrières est donc insuffisante pour le transport sur route.

La solution à ce problème technique est donc de proposer une extension supérieure ou inférieure ou une combinaison des deux pour ce type de barrière, avec pour fonction première d'enserrer et de sécuriser la cargaison sur toute la hauteur utile de chargement disponible et pour une plus grande variété de dimensions unitaires du cargaison.

### Buts de l'invention

La présente invention vise à fournir une solution qui constitue une amélioration par rapport à l'état de la technique et en particulier par rapport au dispositif divulgué dans WO 2008/135236 A1. Elle concerne les plateaux de transport de marchandises tant pour camions, que pour remorques et semi-remorques, que par commodité, nous désignerons collectivement sous le vocable commun de « remorque » ci-après.

Un premier but de l'invention est de pouvoir fournir une remorque avec des parois latérales de maintien qui puissent être aisément et rapidement déplacées depuis une position de chargement où le côté latéral de la remorque est complètement dégagé vers une position de transport où l'entièreté de la cargaison est sécurisée par les parois latérales.

Un deuxième but de l'invention est de pouvoir fournir une remorque avec des parois latérales de maintien qui puissent sécuriser une cargaison composée d'unités emballées, par exemple des ballots de fourrage ou de caisse-palettes de type palox (pour *palette box)* ou encore de tout autre type de conteneurs rigides ou souples jusqu'à la hauteur maximale autorisée par la législation.

Un troisième but de l'invention est de pouvoir fournir une remorque avec des parois latérales de maintien qui puissent sécuriser la ou les couches de chargement se trouvant en contact avec le plateau, lorsque les parois latérales de maintien sont positionnées à leur hauteur maximale.

### Principaux éléments caractéristiques de de l'invention

La présente invention se rapporte à une remorque au sens défini ci-avant, en particulier pour transport de ballots pressés de récoltes agricoles telles que du foin, de la paille ou de l'ensilage, ou de caisses-palettes ou encore de tout autre type de conteneurs rigides ou souples, comportant un plateau de chargement destiné à supporter lesdites marchandises et délimitée par des parois de maintien transversales fixes et au moins une paroi latérale longitudinale amovible, l'espace de transport de la remorque pouvant dès lors être ouvert au niveau de la ou des parois longitudinales, lesquelles sont montées pivotantes sur un dispositif de support et d'entraînement, de manière telle que chaque paroi longitudinale peut être déplacée d'une première position dite ouverte proche du sol et ne dépassant pas en hauteur le plan horizontal correspondant au plateau de chargement à une seconde position dite fermée dans laquelle la paroi longitudinale enserre au moins une couche supérieure des marchandises empilées, et vice versa, caractérisée en ce que l'une au moins des parois longitudinales comporte en outre au moins une extension supérieure et/ou inférieure, montée pivotante respectivement sur le bord supérieur ou le bord inférieur de ladite paroi longitudinale, et dont la rotation est commandée automatiquement par et de manière concomitante avec le mouvement de la paroi longitudinale grâce à un organe d'entraînement asservi, fixé d'une part à un bras de guidage appartenant au dispositif de support et d'entraînement et d'autre part à ladite paroi longitudinale et à l'extension, de manière telle que, lorsque la paroi longitudinale est escamotée vers la position ouverte, respectivement relevée vers la position fermée, l'extension se replie automatiquement sur et tout contre la face extérieure ou intérieure de la paroi longitudinale, vers le bas ou vers le haut selon le cas, laissant l'espace de chargement au-dessus du plateau de chargement totalement libre, respectivement se déplie automatiquement dans le prolongement de la paroi longitudinale, de manière à enserrer les couches supérieures et/ou inférieures de la cargaison.

Selon des formes d'exécution préférées de l'invention, la remorque comporte en outre au moins une des caractéristiques suivantes ou une combinaison appropriée de plusieurs d'entre elles :
- dans le cas où la remorque comporte une extension supérieure, montée pivotante sur le bord supérieur de l'une au moins des parois longitudinales, l'organe d'entraînement est un mécanisme d'embiellage asservi, qui connecte respectivement un bras de guidage supérieur, la paroi longitudinale et l'extension supérieure, comprend un élément de guidage et deux bielles, l'élément de guidage permettant de réaliser les connexions entre les différents éléments précités, ledit élément de guidage étant monté pivotant à une première extrémité sur le petit côté correspondant de la paroi longitudinale, avec une première bielle montée pivotante entre le bras de guidage et une seconde extrémité dudit élément de guidage et avec une seconde bielle montée pivotante à une première extrémité sur un petit côté de l'extension et à la seconde extrémité dudit élément de guidage, une augmentation de l'angle formé entre le bras de guidage supérieur et le petit côté de la paroi longitudinale entraînant le repli progressif de l'extension supérieure sur la face extérieure de la paroi longitudinale ;
- l'organe d'entraînement asservi de la ou des parois longitudinales comprend également une première partie se trouvant à l'avant de la remorque de transport et une seconde partie se trouvant à l'arrière de la remorque de transport, la première et seconde parties étant situées au niveau des parois transversales fixes respectives de la remorque ;
- le dispositif de support et d'entraînement comprend également une structure selon un parallélogramme déformable dont un petit côté est mobile, correspond à un petit côté d'extrémité respectif de la paroi longitudinale, à l'avant ou à l'arrière, l'autre petit côté étant fixe au niveau de la paroi transversale, les côtés du parallélogramme déformable étant montés pivotants entre eux deux à deux et le parallélogramme déformable étant relié de préférence à un dispositif d'entraînement spécifique ;
- le dispositif d'entraînement spécifique comprend un vérin hydraulique, pneumatique ou électrique, connecté entre deux côtés du parallélogramme déformable, de préférence connecté entre un petit et un grand côté du parallélogramme déformable ;
- le bras de guidage de la paroi longitudinale est le long côté supérieur du parallélogramme déformable, respectivement le long côté inférieur du parallélogramme déformable appartenant au dispositif de support et d'entraînement ;
- dans le cas où la remorque comporte une seconde extension, inférieure, montée pivotante sur le bord inférieur de la paroi longitudinale, l'organe d'entraînement est un mécanisme d'embiellage asservi, qui connecte respectivement un bras de guidage supérieur, la paroi longitudinale et l'extension inférieure, comprend un assemblage de quatre éléments de liaison et d'une bielle, un premier élément de liaison et un deuxième élément de liaison étant montés pivotants sur le petit côté correspondant de la paroi longitudinale alors qu'un troisième élément de liaison est monté pivotant sur l'extension inférieure, le premier élément de liaison étant un balancier dont le point de pivot est connecté à une excroissance du petit côté d'extrémité correspondant de la barrière longitudinale, chacun des trois premiers éléments de liaison étant aussi monté pivotant sur un quatrième élément de liaison, la bielle étant montée pivotante à ses eux extrémités respectivement entre le bras de guidage supérieur et le premier élément de liaison, une diminution de l'angle formé par le bras de guidage supérieur et le petit côté de la paroi longitudinale entraînant le repli progressif de l'extension inférieure sur la face extérieure de la paroi longitudinale ;
- l'extension supérieure est entraînée par un mécanisme d'embiellage asservi adapté, lié à un bras de guidage inférieur, et l'extension inférieure est entraînée par un mécanisme d'embiellage asservi adapté, lié à un bras de guidage inférieur ;
- l'organe d'entraînement est un mécanisme asservi utilisant un agencement alternatif de bielles ou un mécanisme à engrenages ou un système de poulies, ou encore un assemblage composé d'un vérin hydraulique, pneumatique ou électrique et d'éléments de liaison, qui remplace le mécanisme d'embiellage asservi chargé d'actionner les extensions supérieures et/ou inférieures.

### Brève description des figures

La figure 1 représente une vue en perspective d'une remorque-plateau avec extension selon la présente invention et explicitant les deux positions extrêmes (A, B) prises par les parois ou barrières latérales et les extensions supérieures et inférieures.
La figure 2 représente une vue en élévation de la remorque de la figure 1 successivement lorsque les parois ou barrières latérales sont en position la plus élevée et en position la plus basse.
La figure 3 divulgue une vue en élévation de la remorque de la figure 1 dans un état chargé avec les parois ou barrières latérales et les extensions en position de transport, différentes hauteurs unitaires de cargaison étant illustrées grâce à quatre formats de ballot de fourrage parmi les plus usuels.
La figure 4 est une vue de la face transversale de la remorque de la figure 1.
La figure 5 est une vue détaillée du mécanisme d'articulation des extensions supérieure et inférieure. Les positions extrêmes dépliées - repliées des extensions sont placées côte à côte.

### Description de formes d'exécution préférées de l'invention

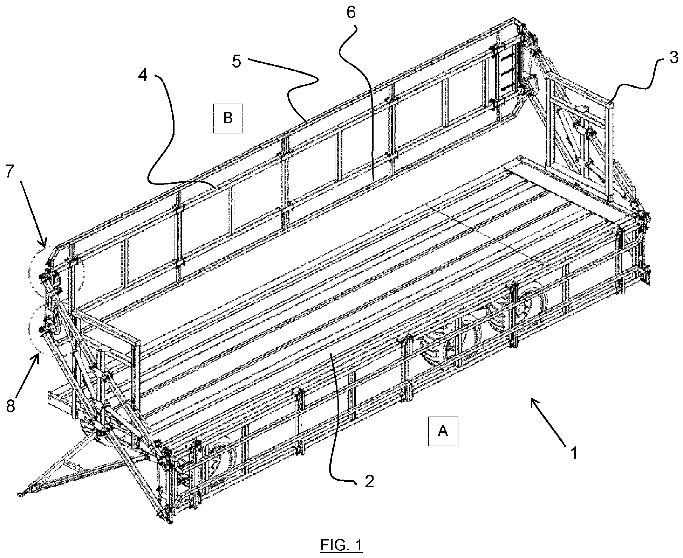

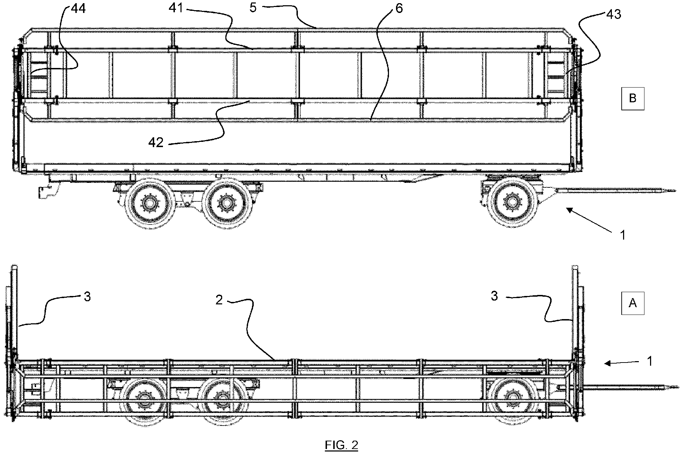

La présente invention propose une solution au problème technique en intégrant une extension supérieure 5 et une extension inférieure 6 sur une barrière latérale 4 de remorque-plateau 1 de transport, tel que représenté sur les figures 1 et 2, qui permette d'enserrer des marchandises telles que du fourrage sur une hauteur avantageusement augmentée par rapport à l'état de la technique.

La solution proposée est d'ajouter à la fois une extension pivotante au sommet de la barrière latérale 4 longeant le bord supérieur de celle-ci, appelée extension supérieure 5, et une extension pivotante sur la partie inférieure de la barrière latérale 4 longeant le bord inférieur de celle-ci, appelée extension inférieure 6. La rotation des deux extensions 5, 6 est commandée automatiquement et concomitamment pendant le mouvement de la barrière latérale 4 au moyen d'un mécanisme d'embiellage 7, 8 asservi au mouvement de la barrière latérale 4. Lorsque la barrière 4 est escamotée complètement vers le bas (d'une position haute B vers une position basse A), l'extension supérieure 5 se replie automatiquement vers le bas sur et tout contre la barrière 4, laissant la zone de chargement au-dessus du plateau de chargement 2 totalement libre en sorte qu'un engin de manutention puisse charger la remorque 1 sans entrave. De même, lors du passage à la position haute B à la position basse A, l'extension inférieure 6 se replie automatiquement vers le haut sur et tout contre la barrière latérale 4 pour permettre à cette dernière de se positionner au plus près du sol, permettant ainsi à l'assemblage de ne pas dépasser la hauteur du plateau de chargement 2. Lorsque la barrière 4 est ramenée vers le haut en position de transport B, les extensions supérieure 5 et inférieure 6 se déplient automatiquement dans le prolongement vertical des parois latérales longitudinales 4 pour sécuriser la cargaison sur une hauteur plus importante. La solution selon l'invention doit également respecter le gabarit routier maximal en largeur de 2,55 m lorsque les barrières latérales sont en position route B.

Les parois latérales longitudinales 4 sont essentiellement rectangulaires, avec deux grands côtés longitudinaux 41, 42 et deux petits côtés verticaux 43, 44 extérieurs, et s'étendent respectivement sur la longueur séparant les parois transversales avant et arrière de la remorque.

La particularité de l'invention est que le mécanisme de pivotement des deux extensions 5 et 6, outre qu'il puisse être original en soi, se met en mouvement en même temps que le pivotement vers le haut B ou le bas A de la barrière latérale 4.

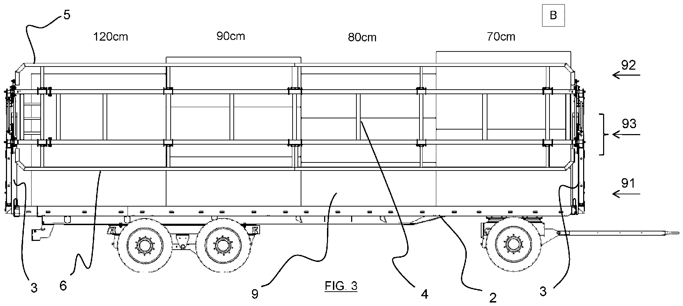

Selon une forme d'exécution préférée de l'invention illustrée en figure 3, la remorque de transport 1 pour marchandises, en particulier des ballots pressés 9 de récoltes agricoles telles que du foin, de la paille ou de l'ensilage ou de caisses-palettes de type palox ou encore tout autre type de conteneurs rigides ou souples, comporte une plateforme ou un plateau de chargement 2 destiné à supporter lesdites marchandises et est délimitée par des parois de maintien latérales transversales 3 et longitudinales 4. L'espace de transport de la remorque peut être ouvert au niveau de chacune des parois latérales longitudinales 4, en proposant un dégagement illimité en hauteur pour faciliter les opérations de chargement et déchargement de la remorque. L'exemple illustré sur les figures 1, 2 et 3 est une remorque-plateau 1 à trois essieux. Cet exemple, où la remorque est destinée à être attelée à un véhicule automoteur, ne limite nullement la portée de l'invention. Il pourrait également s'agir d'un engin automoteur, tracté ou semi-porté de transport possédant un plateau de chargement, sans que l'on se départisse de l'esprit de l'invention.

La figure 3 permet d'apprécier l'avantage octroyé par le gain de hauteur sécurisée apportée par les extensions supérieure 5 et inférieure 6 par une visualisation d'un exemple de chargement variable ou non standardisé composé de ballots ou caisses-palettes 9 successivement de 120 cm, 90 cm, 80 cm et 70 cm de haut. La dernière couche 92 est sécurisée par l'entremise de l'extension supérieure 5 de manière à empêcher le basculement ou le glissement de la cargaison 9. La première couche 91 est quant à elle maintenue en place par la mise en contact du haut du ballot ou de la caisse-palette 9 avec l'extension inférieure 6. On distingue notamment que, dans le cas de charge de 70 cm de haut, seule les couches intermédiaires 93 sont enserrées par les barrières latérales 4, démontrant par cet exemple qu'elles ne peuvent garantir à elles-seules l'entière sécurité du chargement que sous certaines conditions, éventuellement en limitant la hauteur maximale du chargement en deçà de la hauteur maximale permise par la réglementation.

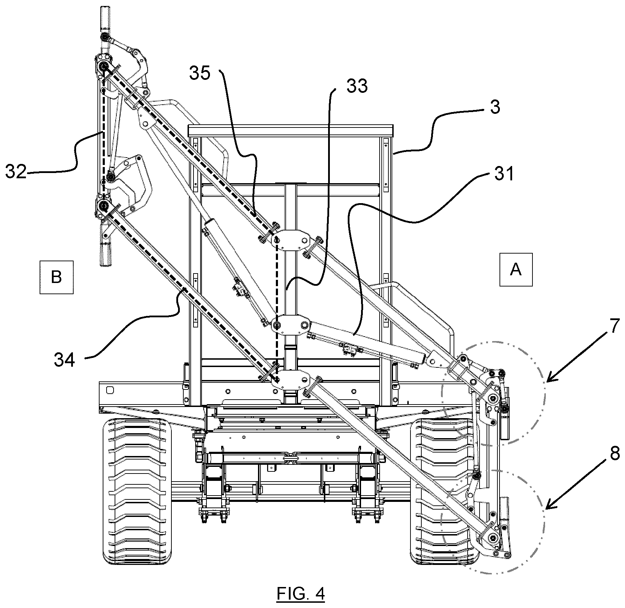

La figure 4 montre le mécanisme d'actionnement des barrières latérales 4 dans leurs deux positions limites de fonctionnement basse (A) et haute (B). Les parois latérales longitudinales 4 sont montées pivotantes sur un mécanisme de support et d'entraînement, de manière telle que chaque paroi latérale longitudinale peut être déplacée d'une première position ouverte A proche du sol et ne dépassant pas en hauteur le plan horizontal correspondant au plateau de chargement 2 de la remorque à une seconde position fermée B dans laquelle la paroi longitudinale enserre au moins une couche supérieure 92 et inférieure 91 des marchandises empilées, et vice versa.

Les deux parois transversales 3 situées à l'avant et à l'arrière du plateau de chargement 2 comprennent chacune deux dispositifs de support et d'entraînement des parois latérales longitudinales 4, un par côté gauche et droit. Chaque dispositif de support et d'entraînement comprend avantageusement un parallélogramme déformable dont un des petits côtés 32, mobile, est connecté à (ou coïncide avec) un petit côté d'extrémité respectif 43, 44 de la paroi latérale longitudinale 4 correspondante, à l'avant ou à l'arrière, l'autre petit côté 33 étant attaché de manière fixe à la paroi transversale 3. La longueur des deux grands côtés du parallélogramme, les bras de guidage inférieur 34 et supérieur 35, est choisie de manière à respecter les contraintes primaires du système, à savoir ne pas dépasser la hauteur du plateau 2 en position A et ne pas étendre la largeur du véhicule au-delà de 2,55 m en position B. Les parallélogrammes déformables reliant une même paroi longitudinale 4 sont de préférence actionnés par un dispositif d'entraînement télécommandé quelconque 31 indépendant des parallélogrammes déformables reliant l'autre paroi longitudinale, mais un dispositif d'actionnement commun est également approprié. Les côtés du parallélogramme déformable sont donc montés pivotants entre eux deux à deux, et l'angle interne est continuellement modifiable entre les deux positions limites A et B. Les deux parallélogrammes situés sur la même paroi transversale 3 avant ou arrière peuvent être avantageusement disposés de manière à ce que leur petit côté fixe 33 soit situé sur un montant commun.

On notera qu'il est à la portée de l'homme de métier de remplacer le dispositif de support et d'entraînement par tout autre mécanisme permettant d'obtenir le même résultat. Le dispositif de support et d'entraînement situé sur les parois transversales 3 peut par exemple être actionné manuellement ou au moyen d'un organe d'entraînement, de préférence un vérin hydraulique, pneumatique ou électrique connecté entre deux côtés du parallélogramme déformable. Le dispositif de support et d'entraînement va alors permettre, une fois actionné, que la paroi latérale longitudinale 4 correspondante puisse passer d'une première position A dite « ouverte » à une seconde position B dite « fermée », et vice versa, en passant par un continuum de positions intermédiaires.

Selon une forme d'exécution alternative, les deux parallélogrammes déformables sont commandés de manière à se déplacer simultanément de sorte à entraîner également simultanément et dans le même mouvement synchrone les parois latérales longitudinales 4 respectives gauche et droite. Les deux parois latérales longitudinales 4 peuvent ainsi être commandées soit simultanément soit indépendamment l'une de l'autre.

Selon les caractéristiques de l'invention, les extensions supérieure 5 et inférieure 6 sont fixées pivotantes respectivement sur les parties supérieure 41 et inférieure 42 des parois latérales longitudinales 4. Les points de pivot peuvent être notamment fixés à l'aide d'étriers sur les parois latérales 4 avec l'avantage de permettre l'assemblage des extensions 5, 6 sur tout type de remorque 1 existante. Dans le cas particulier du mode d'exécution représenté sur les figures, les extensions supérieure 5 et inférieure 6 sont actionnées respectivement par l'entremise d'un embiellage 7, 8 et connecté au bras de guidage supérieur 35, à raison de deux embiellages 7, 8 par extension et par petit côté.

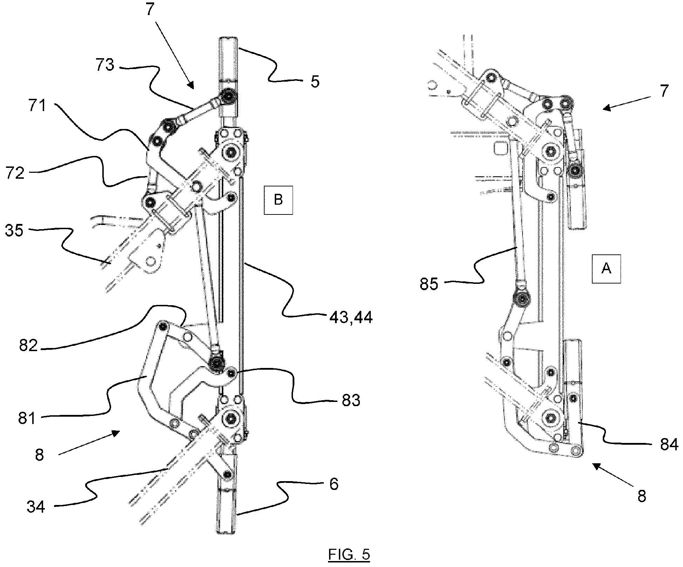

La figure 5 illustre les deux mécanismes d'embiellage 7, 8 dans leurs deux états limites, lorsque la barrière latérale 4 est en position basse A ou haute B. Selon une forme d'exécution préférée, les deux extensions 5, 6 se replient à l'extérieur de la remorque, le tout affleurant le plateau de chargement 2 sans le dépasser lorsque les barrières latérales 4 sont placées en position basse A. Lorsque la barrière latérale 4 est en position haute B, elle est prolongée verticalement en haut et en bas par les extensions supérieure 5 et inférieure 6. Ces dernières sont alors contenues intégralement dans la limite d'encombrement horizontal de la barrière latérale 4, ne dépassant pas la largeur maximale de 2.55 m imposée par la réglementation.

L'embiellage supérieur 7 est piloté par le mouvement relatif du bras de guidage supérieur 35 par rapport au petit côté 43, 44 de la barrière latérale 4 et commande le déploiement de l'extension supérieure 5. La connexion entre ces trois éléments est réalisée au moyen d'un élément de guidage 71 et de deux bielles 72, 73. L'élément de guidage 71 est par exemple composé de deux éléments tels que des plats disposés parallèlement et connectés par trois axes transversaux permettant de réaliser les connections entre les différents éléments précités. L'élément de guidage 71 est monté pivotant, à une première extrémité, sur le petit côté 43, 44 correspondant de la barrière latérale 4 et qui sert de repère fixe. La première bielle 72 qui permet de capter le changement de position de la barrière latérale 4 est montée pivotante entre le bras de guidage supérieur 35 et une seconde extrémité de l'élément de liaison 71. La bielle 73 est montée pivotante sur le petit côté de l'extension supérieure 5 et sur ladite seconde extrémité de l'élément de guidage 71, rendant ainsi possible la transmission du mouvement vers l'extension supérieure 5. Finalement, une augmentation de l'angle formé entre le bras de guidage supérieur 35 et le petit côté 43, 44 de la barrière latérale 4 entraîne le repli progressif de l'extension supérieure 5.

L'embiellage inférieur 8 est également piloté par le mouvement relatif du bras de guidage supérieur 35 par rapport au petit côté 43, 44 de la barrière latérale 4 et commande le déploiement de l'extension inférieure 6. La connexion entre ces trois composants est réalisée au moyen d'un assemblage de quatre éléments de liaison et d'une bielle. L'élément de liaison 82 est un balancier dont le point de pivot est connecté à une excroissance du petit côté 43, 44 correspondant de la barrière latérale 4, une extrémité est liée à l'extrémité inférieure de la bielle 85 et l'autre extrémité à une première extrémité de l'élément de liaison 81. Une extrémité de l'élément de liaison 83 est montée pivotante sur le petit côté 43, 44 correspondant de la barrière latérale 4, son autre extrémité étant liée en pivot dans la longueur de l'élément de liaison 81. Une extrémité de l'élément de liaison 84 est connectée pivotante à l'extension inférieure 6, l'autre étant liée en pivot à la seconde extrémité de l'élément de liaison 81. La bielle 85, dont l'autre extrémité est liée en pivot au bras de guidage 35, transmet le mouvement de ce dernier vers l'élément de liaison 82, qui transmet le mouvement à son tour, via l'élément de liaison 81 également guidé par l'élément de liaison 83, vers l'élément de liaison 84, lequel commande le déplacement de l'extension inférieure. Une augmentation de l'angle formé entre le bras de guidage 35 et le petit côté 43, 44 de la barrière latérale 4 entraîne le repli progressif de l'extension inférieure 6.

La rotation de la paroi latérale 4 et des deux extensions 5, 6, dont le mouvement est rendu concomitant par l'utilisation des deux embiellages asservis 7, 8, est assurée par le mouvement du bras de guidage 35, lui-même commandé par un vérin hydraulique 31 par exemple. Il va sans dire que l'inversion du dispositif, à savoir un embiellage 7 reliant l'extension inférieure au bras de guidage inférieur 34 et un embiellage 8 reliant l'extension supérieure au bras de guidage inférieur 34, n'est qu'un mode de réalisation alternatif de l'invention

Selon un mode de réalisation alternatif, la remorque 1 est équipée de l'extension supérieure 5 seule montée sur la partie supérieure de la barrière latérale 4 et reliée au bras de guidage 35 supérieur par l'entremise de l'embiellage 7, ou est équipée de l'extension inférieure 5 seule montée sur la partie inférieure de la barrière latérale 4 et reliée au bras de guidage 35 par l'entremise de l'embiellage 8.

Selon un autre mode de réalisation particulier, on peut prévoir le pilotage des extensions supérieure 5 et/ou inférieure 6 par l'entremise du bras de guidage inférieur 34 et d'un mécanisme alternatif d'embiellage asservi adapté à cette configuration.

Selon encore un mode de réalisation alternatif, on peut prévoir le repliage des extensions supérieure 5 et/ou inférieure 6 vers l'intérieur de la barrière latérale 4 à l'aide d'un mécanisme d'embiellage asservi 7, 8 modifié.

On notera qu'une modalité alternative et avantageuse de l'invention serait de remplacer le dispositif d'embiellage 7, 8 par tout autre mécanisme asservi permettant d'obtenir le même résultat. Notamment, le déploiement des extensions supérieure 5 et inférieure 6 peut être actionné au moyen d'un organe d'entraînement par exemple constitué d'un agencement alternatif de bielles, d'un mécanisme à engrenages, d'un système de poulies, ou encore au moyen d'un assemblage composé d'un vérin hydraulique, pneumatique ou électrique, commandé automatiquement suivant le mouvement de la barrière latérale 4, et d'éléments de liaison.

### Liste des symboles de référence

- 1: Remorque de transport
- 2: Plateau de chargement
- 3: Paroi transversale
- 31: Dispositif d'entraînement spécifique (ex. vérin)
- 32: Petit côté mobile du parallélogramme déformable
- 33: Petit côté fixe du parallélogramme déformable
- 34: Bras de guidage inférieur ou grand côté mobile du parallélogramme déformable
- 35: Bras de guidage supérieur ou grand côté mobile du parallélogramme déformable
- 4: Paroi latérale longitudinale ou barrière latérale
- 41: Grand côté longitudinal supérieur
- 42: Grand côté longitudinal inférieur
- 43, 44: Petits côtés verticaux
- 5: Extension supérieure
- 6: Extension inférieure
- 7: Mécanisme d'embiellage supérieur
- 71: Elément de guidage
- 72: Bielle de connexion I
- 73: Bielle de connexion II
- 8: Mécanisme d'embiellage inférieur
- 81: Elément de liaison I
- 82: Elément de liaison II
- 83: Elément de liaison III
- 84: Elément de liaison IV
- 85: Bielle de connexion
- 9: Cargaison
- 91: Couche inférieure
- 92: Couche supérieure
- 93: Couche(s) intermédiaire(s)
- A: Barrières latérales en position basse « ouverte »
- B: Barrières latérales en position haute « fermée »

## Revendications

1. Une remorque, ou encore un engin automoteur, tracté ou semi-porté, de transport (1) pour marchandises, comportant un plateau de chargement (2) destiné à supporter des marchandises et délimitée par des parois de maintien transversales fixes (3) et au moins une paroi latérale longitudinale amovible (4), l'espace de transport de la remorque pouvant dès lors être ouvert au niveau de la ou des parois longitudinales (4), lesquelles sont montées pivotantes sur un dispositif de support et d'entraînement (31, 32, 33, 34, 35), de manière telle que chaque paroi longitudinale (4) peut être déplacée d'une première position dite ouverte (A) proche du sol et ne dépassant pas en hauteur le plan horizontal correspondant au plateau de chargement (2) à une seconde position dite fermée (B) dans laquelle la paroi longitudinale (4) enserre au moins une couche des marchandises empilées, et vice versa, **caractérisée en ce que** l'une au moins des parois longitudinales (4) comporte en outre au moins une extension supérieure et/ou inférieure (5, 6), montée pivotante respectivement sur le bord supérieur (41) ou le bord inférieur (42) de ladite paroi longitudinale (4), et dont la rotation est commandée automatiquement par et de manière concomitante avec le mouvement de la paroi longitudinale (4) grâce à un organe d'entraînement asservi (7, 8) fixé d'une part à un bras de guidage (34, 35) appartenant au dispositif de support et d'entraînement (31, 32, 33, 34, 35) et d'autre part à ladite paroi longitudinale (4, 43, 44) et à l'extension (5, 6), de manière telle que, lorsque la paroi longitudinale (4) est escamotée vers la position ouverte (A), respectivement relevée vers la position fermée (B), l'extension (5, 6) se replie automatiquement sur et tout contre la face extérieure ou intérieure de la paroi longitudinale (4, 43, 44), vers le bas ou vers le haut selon le cas, laissant l'espace de chargement au-dessus du plateau de chargement (2) totalement libre, respectivement se déplie automatiquement dans le prolongement de la paroi longitudinale (4, 43, 44), de manière à enserrer les couches supérieures (92) et/ou inférieures (91) de la cargaison.

2. La remorque selon la revendication 1, **caractérisée en ce que,** dans le cas où la remorque (1) comporte une extension supérieure (5), montée pivotante sur le bord supérieur (41) de l'une au moins des parois longitudinales (4), l'organe d'entraînement est un mécanisme d'embiellage (7), qui connecte respectivement un bras de guidage supérieur (35), la paroi longitudinale (4) et l'extension supérieure (5), comprend un élément de guidage (71) et deux bielles (72, 73), l'élément de guidage (71) permettant de réaliser les connexions entre les différents éléments précités, ledit élément de guidage (71) étant monté pivotant à une première extrémité sur le petit côté correspondant (43, 44) de la paroi longitudinale (4), avec une première bielle (72) montée pivotante entre le bras de guidage supérieur (35) et une seconde extrémité dudit élément de guidage (71) et avec une seconde bielle (73) montée pivotante à une première extrémité sur un petit côté de l'extension (5) et à la seconde extrémité dudit élément de guidage (71), une augmentation de l'angle formé entre le bras de guidage supérieur (35) et le petit côté (43, 44) de la paroi longitudinale (4) entraînant le repli progressif de l'extension supérieure (5) sur la face extérieure de la paroi longitudinale (4).

3. La remorque selon la revendication 1 ou 2, **caractérisée en ce que** l'organe d'entraînement (7, 8) de la ou des parois longitudinales (4) comprend une première partie se trouvant à l'avant de la remorque de transport (1) et une seconde partie se trouvant à l'arrière de la remorque de transport (1), au niveau des parois transversales fixes respectives (3) de la remorque (1).

4. La remorque selon l'une quelconque des revendications précédentes, **caractérisée en ce que** le dispositif de support et d'entraînement (31, 32, 33, 34, 35) comprend également une structure selon un parallélogramme déformable (32, 33, 34, 35) dont un petit côté (32) est mobile, correspond à un petit côté d'extrémité respectif (43, 44) de la paroi longitudinale (4), à l'avant ou à l'arrière, l'autre petit côté (33) étant fixe au niveau de la paroi transversale (3), les côtés du parallélogramme déformable étant montés pivotants entre eux deux à deux et le parallélogramme déformable étant relié de préférence à un dispositif d'entraînement spécifique (31).

5. La remorque selon la revendication 4, **caractérisée en ce que** le dispositif d'entraînement spécifique (31) comprend un vérin hydraulique, pneumatique ou électrique, connecté entre deux côtés du parallélogramme déformable (32, 33, 34, 35).

6. La remorque selon la revendication 5, **caractérisée en ce que** le dispositif d'entraînement spécifique (31) est connecté entre un petit et un grand côté du parallélogramme déformable (32, 33, 34, 35).

7. La remorque selon la revendication 4, **caractérisée en ce que** le bras de guidage (34, 35) de la paroi longitudinale (4) est le long côté supérieur (35) ou inférieur (34) du parallélogramme déformable appartenant au dispositif de support et d'entraînement (31, 32, 33, 34, 35).

8. La remorque selon la revendication 1 ou 2, **caractérisée en ce que,** dans le cas où la remorque comporte une seconde extension (6), inférieure, montée pivotante sur le bord inférieur (42) de la paroi longitudinale (4), l'organe d'entraînement est un mécanisme d'embiellage (8), qui connecte respectivement le bras de guidage supérieur (35), la paroi longitudinale (4) et l'extension inférieure (6), comprend un assemblage de quatre éléments de liaison (81, 82, 83, 84) et d'une bielle (85), un premier élément de liaison (82) et un deuxième élément de liaison (83) étant montés pivotants sur le petit côté correspondant de la paroi longitudinale (4), un troisième élément de liaison (84) étant monté pivotant sur l'extension inférieure (6), le premier élément de liaison (82) étant un balancier dont le point de pivot est connecté à une excroissance du petit côté d'extrémité (43, 44) correspondant de la barrière longitudinale (4), chacun des trois premiers éléments de liaison (82, 83, 84) étant aussi monté pivotant sur un quatrième élément de liaison (81), la bielle (85) étant montée pivotante à ses deux extrémités respectivement entre le bras de guidage supérieur (35) et le premier élément de liaison (82), une augmentation de l'angle formé par le bras de guidage supérieur (35) et le petit côté (43, 44) de la paroi longitudinale (4) entraînant le repli progressif de l'extension inférieure (6) sur la face extérieure de la paroi longitudinale (4).

9. La remorque selon la revendication 1, **caractérisée en ce que** l'extension supérieure (5) est entraînée par un mécanisme d'embiellage asservi (8) adapté, lié à un bras de guidage inférieur (34), et/ou que l'extension inférieure (6) est entraînée par un mécanisme d'embiellage asservi (7) adapté, lié à un bras de guidage inférieur (34).

10. La remorque selon l'une quelconque des revendications 2, 8 et 9, **caractérisée en ce que** l'organe d'entraînement est un mécanisme asservi utilisant un agencement alternatif de bielles ou un mécanisme à engrenages ou un système de poulies, ou encore un assemblage composé d'un vérin hydraulique, pneumatique ou électrique et d'éléments de liaison, qui remplace le mécanisme d'embiellage asservi (7, 8) chargé d'actionner les extensions supérieures et/ou inférieures.

## Patentansprüche

1. Ein Frachttransportanhänger oder selbstfahrendes, gezogenes oder aufgesatteltes Fahrzeug (1), bestehend aus einer Ladeplattform (2) zur Aufnahme von Gütern, die durch feste querverlaufende Haltewände (3) und mindestens eine abnehmbare Längsseitenwand (4) begrenzt ist, wodurch der Transportraum des Anhängers im Bereich der Längsseitenwand oder -wände (4) geöffnet werden kann, die an einer Stütz- und Antriebsvorrichtung (31, 32, 33, 34, 35) derart schwenkbar gelagert sind, dass jede Längsseitenwand (4) aus einer ersten, sogenannten offenen Position (A) in Bodennähe, deren Höhe die der Ladeplattform (2) entsprechende horizontale Ebene nicht überschreitet, in eine zweite, sogenannte geschlossene Position (B) bewegt werden kann, in der die Langseitenwand (4) mindestens eine Lage der gestapelten Ladung festklemmt, und umgekehrt, **dadurch gekennzeichnet, dass** mindestens eine der Längsseitenwände (4) ferner mindestens eine obere und/oder untere Erweiterung (5, 6) umfasst, die jeweils schwenkbar an der Oberkante (41) oder der Unterkante (42) der Längsseitenwand (4) angebracht ist, und deren Drehung automatisch durch und gleichzeitig mit der Bewegung der Längsseitenwand (4) mittels einer servogesteuerten Antriebseinheit (7, 8) gesteuert wird, die einerseits an einem Führungsarm (34, 35), der zur Stütz- und Antriebsvorrichtung (31, 32, 33, 34, 35) gehört, und andererseits an der genannten Längsseitenwand (4, 43, 44) und der Verlängerung (5, 6) befestigt ist, so dass, wenn die Längsseitenwand (4) in die geöffnete Position (A) zurückgezogen bzw. in die geschlossene Position (B) angehoben wird, sich die Erweiterung (5, 6) automatisch auf und flach gegen die Außen- oder Innenseite der Längsseitenwand (4, 43, 44) je nach Fall nach unten oder oben faltet, wodurch der Laderaum über der Ladeplattform (2) vollständig frei bleibt, bzw. sich automatisch in der Verlängerung der Längsseitenwand (4, 43, 44) entfaltet, um so die obere (92) und/oder untere (91) Ladungslage(n) zu klemmen.

2. Der Anhänger nach Anspruch 1, **dadurch gekennzeichnet, dass,** in dem Fall, in dem der Anhänger (1) eine obere Erweiterung (5) umfasst, die schwenkbar an der Oberkante (41) mindestens einer der Längsseitenwände (4) angebracht ist, die Antriebseinheit ein Verbindungsstangenmechanismus (7) ist, der jeweils einen oberen Führungsarm (35), die Längsseitenwand (4) und die obere Erweiterung (5) verbindet, ein Führungselement (71) und zwei Verbindungsstangen (72, 73) umfasst, wobei das Führungselement (71) die Verbindungen zwischen den verschiedenen oben genannten Elementen ermöglicht, wobei das Führungselement (71) an einem ersten Ende schwenkbar an der entsprechenden kurzen Seite (43, 44) der Längsseitenwand (4) angebracht ist, wobei eine erste Verbindungsstange (72) schwenkbar zwischen dem oberen Führungsarm (35) und einem zweiten Ende des genannten Führungselements (71) angebracht ist und eine zweite Verbindungsstange (73) an einem ersten Ende schwenkbar an einer kurzen Seite der Erweiterung (5) und am zweiten Ende des genannten Führungselements (71) angebracht ist, wobei eine Vergrößerung des Winkels, der zwischen dem oberen Führungsarm (35) und der kurzen Seite (43, 44) der Längsseitenwand (4) gebildet wird, das allmähliche Umklappen der oberen Erweiterung (5) auf die Außenseite der Längsseitenwand (4) bewirkt.

3. Der Anhänger nach Anspruch 1 oder 2, **dadurch gekennzeichnet, dass** die Antriebseinheit (7, 8) der Längsseitenwand oder - wände (4) einen ersten Teil umfasst, der sich an der Vorderseite des Transportanhängers (1) befindet, und einen zweiten Teil, der sich an der Rückseite des Transportanhängers (1) im Bereich der jeweiligen festen Querwände (3) des Anhängers (1) befindet.

4. Der Anhänger gemäß einem der vorstehenden Ansprüche, **dadurch gekennzeichnet, dass** die Stütz- und Antriebsvorrichtung (31, 32, 33, 34, 35) auch eine Struktur in Form eines verformbaren Parallelogramms (32, 33, 34, 35) umfasst, dessen eine kurze Seite (32) beweglich ist und einer jeweiligen kurzen Stirnseite (43, 44) der Längsseitenwand (4) an der Vorder- oder Rückseite entspricht, wobei die andere kurze Seite (33) an der Querwand (3) befestigt ist, wobei die Seiten des verformbaren Parallelogramms so angebracht sind, dass sie paarweise zueinander schwenkbar sind, und wobei das verformbare Parallelogramm vorzugsweise mit einer spezifischen Antriebsvorrichtung (31) verbunden ist.

5. Der Anhänger nach Anspruch 4, **dadurch gekennzeichnet, dass** die spezifische Antriebsvorrichtung (31) einen hydraulischen, pneumatischen oder elektrischen Zylinder umfasst, der zwischen zwei Seiten des verformbaren Parallelogramms (32, 33, 34, 35) angeschlossen ist.

6. Der Anhänger nach Anspruch 5, **dadurch gekennzeichnet, dass** die spezifische Antriebsvorrichtung (31) zwischen einer kurzen und einer langen Seite des verformbaren Parallelogramms (32, 33, 34, 35) angeschlossen ist.

7. Der Anhänger nach Anspruch 4, **dadurch gekennzeichnet, dass** der Führungsarm (34, 35) der Längsseitenwand (4) die obere (35) oder untere (34) Längsseite des verformbaren Parallelogramms ist, das zur Stütz- und Antriebsvorrichtung (31, 32, 33, 34, 35) gehört.

8. Der Anhänger nach Anspruch 1 oder 2, **dadurch gekennzeichnet, dass,** in dem Fall, dass der Anhänger eine zweite, untere Erweiterung (6) aufweist, die schwenkbar an der Unterkante (42) der Längsseitenwand (4) angebracht ist, die Antriebseinheit ein Verbindungsstangenmechanismus (8) ist, der jeweils den oberen Führungsarm (35), die Längsseitenwand (4) und die untere Erweiterung (6) miteinander verbindet, eine Anordnung aus vier Verbindungselementen (81, 82, 83, 84) und einer Verbindungsstange (85) umfasst, wobei ein erstes Verbindungselement (82) und ein zweites Verbindungselement (83) schwenkbar an der entsprechenden kurzen Seite der Längsseitenwand (4) angebracht sind, ein drittes Verbindungselement (84) schwenkbar an der unteren Erweiterung (6) angebracht ist, wobei das erste Verbindungselement (82) eine Pendelstange ist, dessen Drehpunkt mit einem Überstand an der entsprechenden kurzen Stirnseite (43, 44) der Längswand (4) verbunden ist, wobei jedes der ersten drei Verbindungselemente (82, 83, 84) ebenfalls schwenkbar an einem vierten Verbindungselement (81) angebracht ist, wobei die Verbindungsstange (85) an ihren beiden Enden jeweils zwischen dem oberen Führungsarm (35) und dem ersten Verbindungselement (82) schwenkbar gelagert ist, wobei eine Vergrößerung des Winkels, der zwischen dem oberen Führungsarm (35) und der kurzen Seite (43, 44) der Längsseitenwand (4) gebildet wird, das allmähliche Umklappen der unteren Erweiterung (6) auf die Außenseite der Längsseitenwand (4) bewirkt.

9. Der Anhänger nach Anspruch 1, **dadurch gekennzeichnet, dass** die obere Erweiterung (5) durch einen geeigneten servogesteuerten Verbindungsstangenmechanismus (8) angetrieben wird, der mit einem unteren Führungsarm (34) verbunden ist, und/oder dass die untere Erweiterung (6) durch einen angepassten servogesteuerten Verbindungsstangenmechanismus (7) angetrieben wird, der mit einem unteren Führungsarm (34) verbunden ist.

10. Der Anhänger nach einem der Ansprüche 2, 8 und 9, **dadurch gekennzeichnet, dass** die Antriebseinheit ein servogesteuerter Mechanismus ist, der eine alternative Anordnung von Verbindungsstangen oder einen Getriebemechanismus oder ein Rollensystem oder eine Baugruppe aus einem hydraulischen, pneumatischen oder elektrischen Zylinder und Verbindungselementen verwendet, die den servogesteuerten Verbindungsstangenmechanismus (7, 8) ersetzt, der für die Betätigung der oberen und/oder unteren Erweiterungen zuständig ist.

## Claims

1. A cargo transport trailer, or self-propelled, trailed or semi-mounted vehicle (1), comprising a loading platform (2) designed to support goods and delimited by fixed transverse retaining walls (3) and at least one removable longitudinal side wall (4), enabling the transport space of the trailer to be opened at the level of the longitudinal wall or walls (4), which are pivotally mounted on a support and drive device (31, 32, 33, 34, 35), in such a way that each longitudinal wall (4) can be moved from a first so-called open position (A) close to the ground and not exceeding in height the horizontal plane corresponding to the loading platform (2) to a second so-called closed position (B) in which the longitudinal wall (4) clamps at least one layer of the stacked cargo, and vice versa, **characterised in that** at least one of the longitudinal walls (4) further comprises at least one upper and/or lower extension(s) (5, 6), pivotally mounted respectively on the upper edge (41) or the lower edge (42) of said longitudinal wall (4), and whose rotation is controlled automatically by and concomitantly with the movement of the longitudinal wall (4) by means of a servo-controlled drive unit (7, 8) attached on the one hand to a guide arm (34, 35) belonging to the support and drive device (31, 32, 33, 34, 35) and on the other hand to said longitudinal wall (4, 43, 44) and to the extension (5, 6), in such a way that, when the longitudinal wall (4) is retracted to the open position (A), respectively raised to the closed position (B), the extension (5, 6) automatically folds onto and flat against the outer or inner side of the longitudinal wall (4, 43, 44), downwards or upwards as the case may be, leaving the loading space above the loading platform (2) completely free, respectively automatically unfolds in the extension of the longitudinal wall (4, 43, 44), so as to clamp the upper (92) and/or lower (91) layer(s) of cargo.

2. The trailer according to claim 1, **characterised in that,** in the case where the trailer (1) comprises an upper extension (5), pivotally mounted on the upper edge (41) of at least one of the longitudinal walls (4), the drive unit is a connecting rod mechanism (7), which respectively connects an upper guide arm (35), the longitudinal wall (4) and the upper extension (5), comprises a guide element (71) and two connecting rods (72,73), the guide element (71) enabling the connections between the different aforementioned elements to be made, said guide element (71) being pivotally mounted at a first end on the corresponding short side (43, 44) of the longitudinal wall (4), with a first connecting rod (72) pivotally mounted between the upper guide arm (35) and a second end of said guide element (71) and with a second connecting rod (73) pivotally mounted at a first end on a short side of the extension (5) and at the second end of said guide element (71), an increase in the angle formed between the upper guide arm (35) and the short side (43, 44) of the longitudinal wall (4) causing the progressive folding of the upper extension (5) onto the outer side of the longitudinal wall (4).

3. The trailer according to claim 1 or 2, **characterised in that** the drive unit (7, 8) of the longitudinal wall or walls (4) comprises a first part located at the front of the transport trailer (1) and a second part located at the rear of the transport trailer (1) at the level of the respective fixed transverse walls (3) of the trailer (1).

4. The trailer according to any of the preceding claims, **characterised in that** the support and drive device (31, 32, 33, 34, 35) also comprises a structure in the form of a deformable parallelogram (32, 33, 34, 35), one short side (32) of which is movable, corresponding to a respective short end side (43, 44) of the longitudinal wall (4), at the front or at the rear, the other short side (33) being fixed at the transverse wall (3), the sides of the deformable parallelogram being mounted so as to pivot between each other two-by-two and the deformable parallelogram preferably being connected to a specific drive device (31).

5. The trailer according to claim 4, **characterised in that** the specific drive device (31) comprises a hydraulic, pneumatic or electric cylinder, connected between two sides of the deformable parallelogram (32, 33, 34, 35).

6. The trailer according to claim 5, **characterised in that** the specific drive device (31) is connected between a short and a long side of the deformable parallelogram (32, 33, 34, 35).

7. The trailer according to claim 4, **characterised in that** the guide arm (34, 35) of the longitudinal wall (4) is the upper (35) or lower (34) long side of the deformable parallelogram belonging to the support and drive device (31, 32, 33, 34, 35).

8. The trailer according to claim 1 or 2, **characterised in that,** in the case where the trailer has a second, lower extension (6), pivotally mounted on the lower edge (42) of the longitudinal wall (4), the drive unit is a connecting rod mechanism (8), which respectively connects the upper guide arm (35), the longitudinal wall (4) and the lower extension (6), comprises an assembly of four connecting elements (81, 82, 83, 84) and a connecting rod (85), a first connecting element (82) and a second connecting element (83) being pivotally mounted on the corresponding short side of the longitudinal wall (4), a third connecting element (84) being pivotally mounted on the lower extension (6), the first connecting element (82) being a rocker arm whose pivot point is connected to a protrusion on the corresponding short end side (43, 44) of the longitudinal barrier (4), each of the first three connecting elements (82, 83, 84) also being pivotally mounted on a fourth connecting element (81), the connecting rod (85) being pivotally mounted at its two ends respectively between the upper guide arm (35) and the first connecting element (82), an increase in the angle formed by the upper guide arm (35) and the short side (43, 44) of the longitudinal wall (4) causing the lower extension (6) to progressively fold back onto the outer side of the longitudinal wall (4).

9. The trailer according to claim 1, **characterised in that** the upper extension (5) is driven by an adapted servo-controlled connecting rod mechanism (8) linked to a lower guide arm (34), and/or that the lower extension (6) is driven by an adapted servo-controlled connecting rod mechanism (7) linked to a lower guide arm (34).

10. The trailer according to any of claims 2, 8 and 9, **characterised in that** the drive unit is a servo-controlled mechanism using an alternating arrangement of connecting rods or a gear mechanism or a pulley system, or an assembly consisting of a hydraulic, pneumatic or electric cylinder and connecting elements, which replaces the servo-controlled connecting rod mechanism (7, 8) responsible for actuating the upper and/or lower extensions.
